# EUROPEAN PATENT SPECIFICATION

(11) **EP 1 830 540 B1**
(45) Date of publication and mention of the grant of the patent: **19.08.2009**
(21) Application number: 07102916.9
(22) Date of filing: 22.02.2007
(51) Int. Cl.: H04L 29/06, H04N 7/173

(54) **Method of transmitting audiovisual streams ahead of the user commands, and receiver and transmitter for implementing the method**
Verfahren zum Senden von audiovisuellen Strömen vor den Benutzerbefehlen und Empfänger und Sender zum Ausführen des Verfahrens
Procédé de transmission de flux audiovisuels en anticipant les commandes de l'utilisateur, récepteur et émetteur pour la mise en oeuvre du procédé

(30) Priority: 03.03.2006 FR 0650759
(43) Date of publication of application: 05.09.2007
(73) Proprietor: Thomson Licensing, 92100 Boulogne-Billancourt (FR)
(72) Inventor: Houdaille, Rémi, 92648 Boulogne Cedex (FR); Lubbers, Willem, 92648 Boulogne Cedex (FR); Gautier, Eric, 92648 Boulogne Cedex (FR)
(74) Representative: Le Dantec, Claude

(56) References cited:
- US-A1- 2003 196 211
- US-A1- 2006 020 995

## Description

The invention relates to a method of transmitting audiovisual streams between a device controlled by a user and a server, a multimedia receiver provided with a user interface for implementing the method and a transmitter transmitting the audiovisual streams.

In a digital television system, the number of channels available becomes very large. Several hundred channels can be made available to the user. The users can select a channel using an electronic programme guide (EPG), or even switch from one channel to another by pressing the "Programme+" or "Programme-" buttons on the remote control associated with their receiver, navigating in a way that is commonly called "zapping". In the first case, the EPG can be made up of a mosaic of images showing the video of the programmes transmitted on a certain number of channels, typically 16 channels. These images are small, so the audiovisual data to display each of them does not need any great precision, and because of this the streams that transmit the videos can be in low resolution mode. A low-resolution stream, or reduced stream, is a stream having a bandwidth that is very much lower than a normal stream. In the zapping case, the receiver has an ordered list of channels. Normally, the transmission network assigns the channels a number, and the order followed by the navigation programme when the user hops to the next channel or the preceding channel. The user can also create a favourites list by selecting certain channels from those offered by the network, and the user then navigates within his list by zapping from one channel to another.

The user's device is also provided with a unit for receiving data streams D from a communication network. The communication is conducted either in "multicast" mode (literally "point-to-multipoint" mode), or in "unicast" mode (literally "point-to-point" mode). In the latter case, the device has a bidirectional communication means, preferably high speed, for example an IP DSL line (DSL standing for "Digital Subscriber Line") to receive the audiovisual data packets. The device addresses a request to a server of the network to receive a determined channel, in the case of a multicast, a router receives the various requests and processes them.

When zapping, the images of the programmes transmitted by the device appear in succession on the screen. In all cases, the switchover times depend in particular on:
- transmission times for commands between the client and the network router,
- times for setting up the streams,
- the size of the IP packet management buffers, to take up the variations in the arrival of the latter,
- the size of the video processing buffers,
- the resynchronization of the decoding requiring a wait for the next intra-coded image.

Because of this, when changing channels, the image on the screen is frozen, and sometimes a black screen appears. One solution would involve transmitting all the channels, the device performing only a simple switchover without transmitting any request to the server. However, on an ADSL type access, the available bandwidth does not allow for the permanent transit of multiple audiovisual streams in parallel, and nor do the decoding resources on the receiving device normally allow for decoding operations to be multiplied in parallel. This solution is therefore not satisfactory.

The document WO 2005/112465 filed by THOMSON and describes a method for reducing the bit rate of the "normal" stream. Following a request to change channel, the decoder asks a server to receive the new channel in full-definition mode and this same channel in low-resolution mode. The normal streams and those reserved for zapping are multiplexed in one and the same channel. The low-resolution channel is almost immediately transmissible and therefore the zapping time is reduced, but not to zero. In practice, the image of the desired channel appears after the decoder transmits the request to the server and the server sends it the degraded stream.

The document US 2006/020995 filed by OPIE describes a server transmitting streams to a plurality of decoders. A user commands the switch from one channel to another on his decoder. The server sends on demand at least one image I in the unicast stream. The encoder on the transmission server generates a conventional audio/video stream CONVID. Another stream (FILLVID) is generated to replace the black image with a true image. The FILLVID image stream makes it possible to switch over more quickly when zapping. However, these streams are constantly transmitted which occupies a bandwidth unnecessarily if the user does not select these channels.

The present invention provides a novel solution to this problem of reducing the channel switchover time when zapping while optimizing the bandwidth used.

The subject of the invention is a method of transmitting audiovisual streams from a server to a device, comprising a step for entering a command in order to view a first audiovisual data channel on the device and a step for transmitting to the device a first stream in full-definition mode corresponding to this first channel in response to the entry of the first command;
characterized in that it comprises a second step for transmitting from the server to the device at least one second stream also in response to the entry of the command, this second stream having a smaller bandwidth than the first and transmitting the audiovisual data of a second channel, this second channel being able to be received by a stream in full-definition mode by entering a second command following the first command.

In this way, the invention makes it possible to exploit the availability of a low-resolution stream on the channel to which the user can imminently select using a command. The device receiving the low-resolution stream can thus anticipate an imminent command to change channel.

According to an improvement, the method comprises a step for entering the second command triggering a first step for displaying the second channel received by the second stream having a reduced bandwidth and a step for transmitting to the device a third stream in full-definition mode corresponding to this second channel, the reception of the third stream triggering the display of the second channel in full-definition mode. In this way, the user immediately sees the image extracted from the low-resolution stream when he requests a change of channel. Then, when the full-definition stream is correctly received, the display switches over to the full-definition stream.

According to another improvement, the first display step comprises a step for animating the image extracted from the channel with a reduced bandwidth. In this way, the transition between the low-resolution stream and the full-definition stream is less surprising to the user. According to an improvement, the animation step ends with the display of the images transmitted by the full-definition stream, which further reduces the perception of the transition.

According to another improvement, the device can display a mosaic image made up of the images transmitted by all the channels transmitted by the server, whether in full-definition mode or with a reduced bandwidth. The user can thus have a multiple choice of zapping commands, and each time by entering a command, he can immediately see an image of the newly selected channel.

According to an improvement, the channel with a reduced bandwidth is extracted from a channel transmitting a mosaic image. In this way, the invention uses an existing mosaic stream to extract therefrom the streams with a reduced bandwidth. According to an improvement, the device can create a favourites list of channels, the other channel being immediately accessible by the second user command by navigating in said favourites list. Thus, each device is customized and the server contributes to the anticipation of the channel change commands. According to an improvement, the device displays a channel in full-definition mode and identifiers identifying the second streams.

Another subject of the invention is a transmitter comprising a means of transmitting audiovisual streams over a network, and a means of receiving a request originating from a device for the transmission of a determined stream triggering the activation of the transmission means to transmit the determined stream in full-definition mode to the device. The transmitter comprises a means of transmitting to the same device at least one second stream with a reduced bandwidth, said transmission means also being activated by the means of receiving the request, the second stream being accessible by a command entered on the device when the determined stream is being viewed.

Another subject of the invention is a receiver comprising a means of receiving audiovisual streams transmitted by a network, a means of displaying a received stream and a means of transmitting a request for the transmission of a stream in full-definition mode selected by the user. The receiver also comprises a means of receiving at least one second stream with a reduced bandwidth, a means of entering a command to change stream triggering the transmission of a request for the transmission of the new stream and the display of the content of the second stream received with a reduced bandwidth, the new stream then being displayed when the reception in full-definition mode is established.

The present invention will now become apparent with more details in the context of the description that follows of exemplary embodiments given by way of illustration, by referring to the appended figures, among which:
Figure 1 is a block diagram of an audiovisual receiver for implementing the invention,
Figure 2 is a diagram showing the various elements of a server according to the invention,
Figures 3.a, 3.b, 3.c and 3.d illustrate the various dialogue steps between the audiovisual receiver and the server;
Figures 4.a, 4.b and 4.c represent screen appearances for implementing the invention.

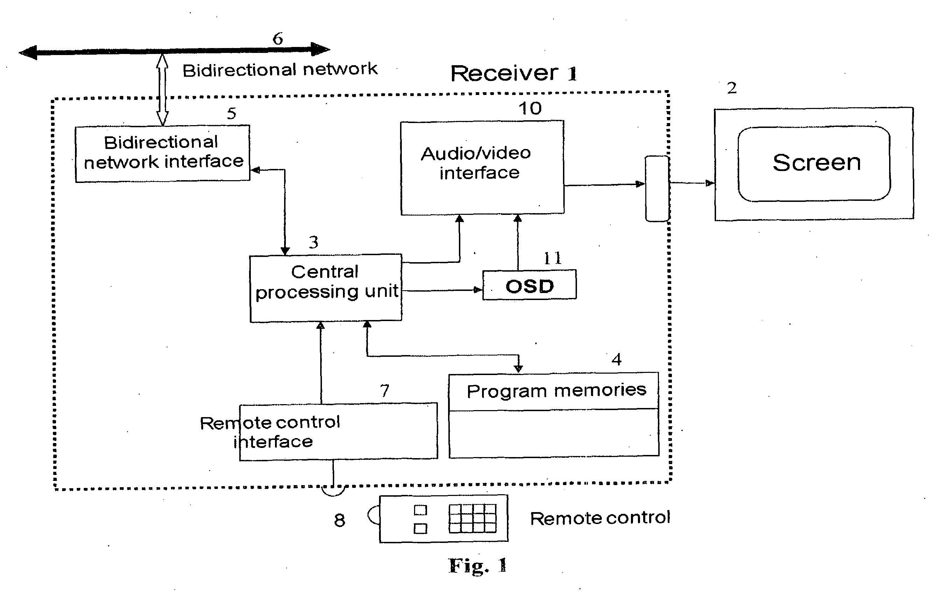

The operation of an audiovisual receiver 1 connected to a display device 2 will be described first using Figure 1. The receiver comprises a central processing unit 3 linked to a program memory (ROM) and working memory (RAM) 4, and an interface 5 for a bidirectional communication with a network 6. According to a particular embodiment, the device is a computer provided with a graphic screen. The network is typically the Internet but the present invention relates to any network enabling audiovisual streams to be received, the bit rate must be sufficient but relatively limited for the possibility of transmitting all the streams in full-definition mode not to be possible. According to a preferred exemplary embodiment, the network uses ADSL technology. The receiver further comprises a receiver of infrared signals 7 to receive the signals from a remote control 8 and an audio/video decoding logic 10 for generating the audiovisual signals sent to the television screen 2. The remote control 8 is provided with direction buttons ↑, ↓, →, ← and buttons: P+, P- and OK, the use of which will be explained later in the description. The receiver also comprises a circuit 11 for displaying data on the screen often called OSD (On-Screen Display) circuit. The OSD circuit 11 is a generator of text and graphics which makes it possible to display menus or pictograms (for example, a number corresponding to the channel being viewed) on the screen, or which makes it possible to mix two audiovisual contents. The OSD circuit is controlled by the central processing unit 3 and a program called "zapper" which is resident in the memory 4. The zapper is typically made up of a program module entered into read-only memory and parameters stored in random-access memory. The zapper can also be implemented in the form of a custom circuit, of ASIC type for example. This circuit can be provided with security functions making it possible to make a payment when a user decides to view a transmission that is subject to payment.

The receiver receives audiovisual transmission identification data from the return channel 6 or from the transmission network. This data comprises items that can be viewed, the title for example, or an image of the trailer. Using an EPG and the buttons of his remote control, the user selects one or more transmissions in order to receive them.

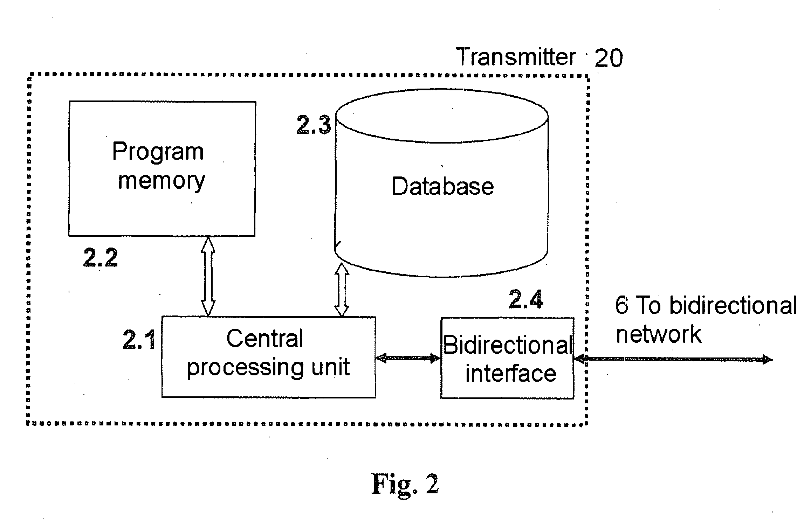

The transmitter transmitting the streams is, according to a preferred embodiment, a DSLAM server 20 which is described in Figure 2 comprises a central processing unit 2.1, a program memory 2.2, an encoding logic 2.3 and a communication interface setting up a plurality of bidirectional links 2.4 across the network 6 with the receivers described previously. The DSLAM server 20 receives from a transmitter all the channels of the bouquet of programmes. At the request of a user, the DSLAM transmits to its receiver the desired programme in a standard definition or SD stream. The network termination produces a low-resolution stream and transmits it to the encoding logic 2.3 of the DSLAM. This reduced stream can be used in particular for a programme guide. The current trend is to provide, in the user interaction, a thumbnail display of the programme that is presented (in the case of the zapping panel, this is in parallel with the display of the full-screen video).

The transmission of a reduced-size stream (typically 1/16th image, also called QCIF) can be taken up in addition to a stream in the bandwidth. The real time decoding of a full-definition stream in parallel with a reduced stream is acceptable.

After having described the various elements of the invention, we will now go on to explain how they cooperate.

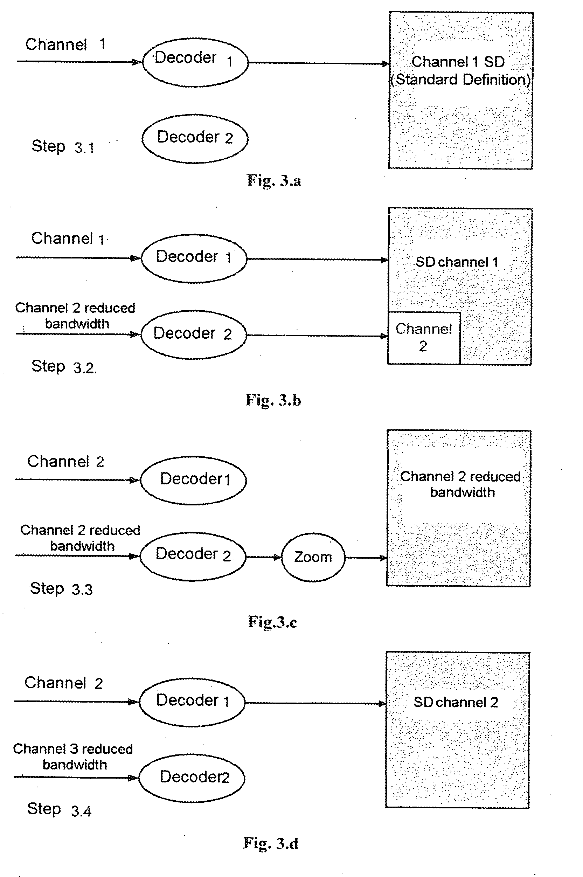

The various dialogues between the user and the server are illustrated by the various steps illustrated by the four figures 3.a, 3.b, 3.c and 3.d.

In the step 3.1 illustrated by Figure 3.a, the user has entered a channel number on his remote control, the request has been transmitted to the DSLAM 20. Then, the communication is set up and the audiovisual content of the selected channel is transmitted. In the step 3.2 illustrated in Figure 3.b, the receiver 1 starts running the zapper as a background task. The zapper identifies the channel 1 being received and deduces from it the programmes that are immediately accessible if the user presses the P+ or P- button of his remote control 8. Typically, the zapping order is defined by the programme transmitter by the numbers of the streams, so it is possible to expect that the next zapping command will select the channel 2. In this way, the server, on receiving the channel change request, deduces which reduced stream channel it has to transmit. A variant consists in the user defining a favourites list and navigating within this list using the P+, P-buttons on the remote control 8. The zapper transmits to the DSLAM 20 a request to set up the requested full-definition stream and the reduced streams of the programmes following and/or preceding the one requested. The receiver 1 then receives the full-definition stream F1 of the channel selected by the user and at least the reduced stream F'2 (possibly F'3, F'4, etc.). The display is in real time, immediately the synchronization of the data is completed.

In the step 3.3 illustrated by Figure 3.c, the user presses the P+ button on his remote control 8. The zapper transmits a request to the DSLAM to receive the channel F2 which follows the channel F1 currently being transmitted. At the same time, the zapper switches the extraction of the data to be displayed from the stream F1 to the reduced stream F'2, the data is sent to the audio/video decoding logic 10 for video playback on the display means 2 and the transmission of audio signals. In this way, the zapping command immediately results in the appearance of the desired programme. Inasmuch as the zapper uses a reduced stream, the playback will be of mediocre quality but sufficient for the user to follow the action. If the reduced stream is designed to display a small animated image (or "imagette") for it to be incorporated in a mosaic image for example, the zapper enlarges the small animated image and displays it full screen. When the stream F2 arrives at an image that makes it possible to tune into it, the display switches from the reduced stream to the full-definition stream.

In the step 3.4 illustrated by Figure 3.d, the DSLAM transmits the desired programme via a full-definition stream F2. The receiver extracts the data from the full-definition stream and sends it to the audio/video decoding logic 10 for video playback on the display means 2 and the transmission of audio signals. From this moment, the user receives the desired channel with an optimal playback quality. The DVB_IP standard recommends the use of RTP and RTSP signals to manage the synchronization between multiple streams. The receiver 1 uses these signals to ensure the synchronization on transitions between a reduced stream F'i and the corresponding full-definition stream Fi, and vice versa. Then, the zapper transmits to the DSLAM a request to set up the reduced streams of the new programmes that have the greatest probability of being selected by the user by entering zapping commands using the P+ or P- buttons on the remote control 8.

It will be noted that the receiver requests streams that the user does not request, in order to adopt a position such that, if the user changes channel, the corresponding reduced stream is already connected. Various known anticipation heuristics may be usable here.

According to an improvement, just after a new channel has been selected by a zapping command, the references of the following and preceding streams that are identified by the zapper appear in a panel at the bottom of the screen. This panel disappears after a few seconds. In this way, the user knows that these channels can immediately be viewed by a zapping command.

In the above text, the invention is described in the context of zapping, when the user is navigating from channel to channel by entering a command. The invention is not limited to this context, other events can trigger requests that anticipate the behaviour of the user. For example, when the programme currently being transmitted mentions other programmes transmitted on other channels at the same time, the receiver 1 asks the DSLAM to transmit to it the reduced streams of channels transmitting these programmes in case the user might select one. Another event is the user taking hold of the remote control, handling sensors on the remote control 8 informing the receiver that the user has taken the remote control probably in order to enter a new command. The receiver 1 anticipates the zapping command by asking the DSLAM to transmit to it the streams of the programmes following and preceding the current one in the zapping list.

According to a simple embodiment, the zapper requests only one reduced stream. This stream is the one corresponding to the channel selected by the user by the same last zapping command. If, to access the current programme, the user has pressed P+, then it is the reduced stream of the following channel that is requested of the DSLAM. If, to access the current programme, the user has pressed P-, then it is the reduced stream of the preceding channel that is requested of the DSLAM. In a more bandwidth-intensive mode, the zapper asks the server for two reduced streams corresponding to the two channels that can be accessed either by the P+ command or by the P- command.

According to another embodiment, the server transmits a stream transporting a mosaic image made up by aggregating reduced streams on the server. The receiver extracts from the mosaic image the image of the channel requested by the zapping command, this image is enlarged and appears full screen following the zapping command. The advantage of this embodiment is that the server constantly transmits the mosaic streams, so there is no need for any specific request to the server. According to a variant of embodiment, the server does not transmit mosaic streams, so that it is the zapper which asks to receive eight reduced streams, four streams corresponding to the channels that can be accessed by pressing the "P+" button once, twice, three times and four times, and four streams corresponding to the channels that can be accessed by pressing the "P-" button once, twice, three times and four times. By pressing the "M" (for "mosaic") button, the zapper shows the videos transmitted by the eight reduced streams and the stream received in full-definition mode, preferably the video image of the stream received in full-definition mode being in the middle of the mosaic of nine images. In this way, the mosaic image appears in a very short time since the streams are already available. The mosaic image can comprise a number of images other than nine, for example 16 or 25. In the mosaic mode, by pressing "P+" or "P-", the user changes the channel received in full-definition mode. The device sends a request to the server asking to receive a new channel in reduced mode. Initially, the mosaic displays eight images, then the ninth corresponding to the new reduced stream channel. This delayed appearance enables the user to better distinguish the changes from one mosaic image to another, and in particular the image of the new channel.

A reduced stream is a stream used to display an image of lower definition than a normal image. The reduced stream can have a short GOP form which favours faster zapping than the full-definition sequence (the overhead of the images I on this image size is less than in full-definition mode).

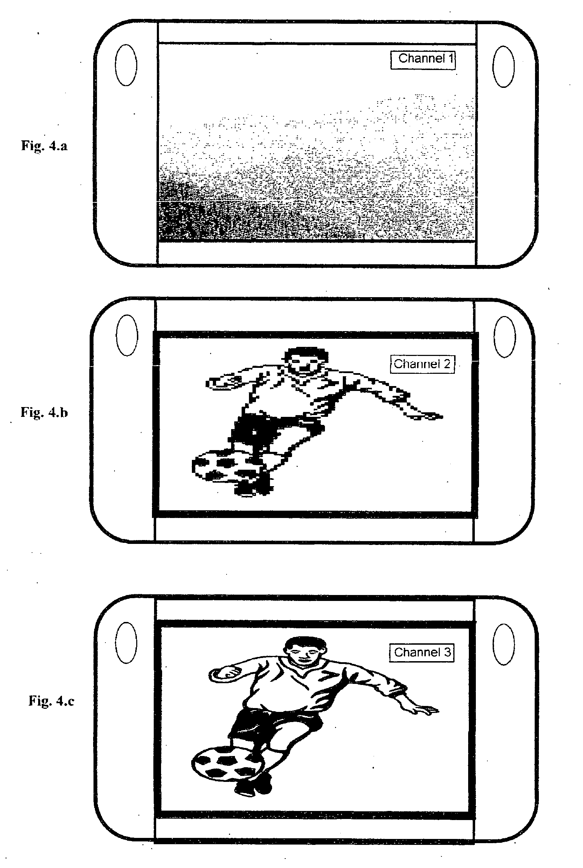

Figures 4.a, 4.b and 4.c show the changes to the images displayed before and after a zapping command. Figure 4.a shows the image extracted from a full-definition stream. The user activates a command to switch to the next channel. The zapper extracts the image from the reduced stream and the screen appearance of Figure 4.b then appears. The image displayed is of mediocre quality. After a certain time, the receiver sets up the full-definition stream and displays the image represented in Figure 4.c, which is of optimal quality.

As can be seen in Figures 4, just after the zapping command, the image taken from the reduced stream is degraded relative to the image in full-definition mode. Improvements make it possible to temporarily mask this degradation to the eyes of the user. In practice, the visual transition between the reduced stream and the full-definition stream is relatively marked, which can surprise the user. A first approach consists in displaying the degraded image, by giving it a "zoom effect" to progressively expand the starting small animated image to cover all the screen area. Such an animation takes a time that can be the same as the time needed to tune into the full-definition stream. Visually, in an image with varying size, the resolution problems are less noticeable. Since the image is small at the outset, the fact that it is extracted from a reduced stream is thus largely masked. Another approach consists in creating an animation, the image extracted from the reduced stream appears as a screen portion, sometimes on the left, sometimes on the right. Another approach consists in presenting the image extracted from the reduced stream on two sides of a rotating and enlarging cube. At the end of the rotation, the side occupies the entire screen and it is at this moment that the switchover to the full-definition stream occurs. Another approach consists in creating a fade-in, fade-out or any other animation, the aim of which is to divert the attention of the user from the quality of the initial images. In all cases, the animation lasts for the time it takes to set up the full-definition stream. When the full-definition stream is set up, the full-definition image extracted from this stream is displayed. Advantageously, this time corresponds to the longest time measured on a previous switchover.

Another way of masking the transition from the eyes of the users consists in fitting a filter. Typically, the receiver calculates a weighted average between the enlarged image taken from the reduced stream and the full-definition image. The weighting varies from (100%, 0%) to (0%, 100%) in a time that comprises at least the time needed to set up the full-definition stream. Advantageously, the time of the filtering step significantly exceeds that of setting up the stream, which makes it possible ultimately to use the full-definition data and so achieve a 100% full-definition image.

## Claims

1. Method of transmitting audiovisual streams from a server to a device, comprising a step for entering a first command in order to view a first audiovisual data channel on the device and a step for transmitting to the device (1) a first stream in full-definition mode corresponding to this first channel in response to the entry of the first command;
further comprising a second step for transmitting from the server to the device at least one second stream also in response to the entry of the first command, this second stream having a smaller bandwidth than the first and **characterized by** the second stream transmitting the audiovisual data of a second channel, this second channel being able to be received by a stream in full-definition mode by entering a second command following the first command.

2. Method of transmitting audiovisual streams according to Claim 1; **characterized in that** it comprises a step for storing a list of audiovisual channels, a second stream to be transmitted with a reduced bandwidth being one of the elements following or preceding the first stream within said list.

3. Method of transmitting audiovisual streams according to Claim 1 or 2; **characterized in that** it comprises a step for entering the second command triggering a first step for displaying the second channel received by the second stream having a reduced bandwidth and a step for transmitting to the device (1) a third stream in full-definition mode corresponding to this second channel, the reception of the third stream triggering the display of the second channel in full-definition mode.

4. Method of transmitting audiovisual streams according to Claim 3; **characterized in that** the first display step comprises a step for animating the image transmitted by the stream having a reduced bandwidth.

5. Method of transmitting audiovisual streams according to Claim 4; **characterized in that** the animation step ends with the display of the images in full-definition mode transmitted by the third stream.

6. Method of transmitting audiovisual streams according to any one of Claims 1 to 5; **characterized in that** the second transmission step consists in transmitting a plurality of second streams accessible by second user commands, and a step for displaying on the device a mosaic image displaying the visual contents extracted from said second streams.

7. Method of transmitting audiovisual streams according to any one of Claims 1 to 5; **characterized in that** the stream with a reduced bandwidth is extracted from a stream transmitting a mosaic image.

8. Method of transmitting audiovisual streams according to any one of the preceding claims; **characterized in that** it comprises a step for creating a second stream favourites list, one of the second streams being immediately accessible by the second user command by navigating in said favourites list.

9. Method of transmitting audiovisual streams according to any one of the preceding claims; **characterized in that** it comprises on the device (1) a step for displaying the first channel in full-definition mode and identifiers identifying the second streams.

10. Transmitter (20) comprising a means (2.4) of transmitting audiovisual streams over a network (6), and a means (2.4) of receiving a request originating from a device (1) in order to view a first audiovisual data channel on said device following the entry of a first command on the device triggering the activation of the transmission means to transmit a first stream in full-definition mode to the device (1); it further comprises a means (2.4) of transmitting to the same device (1) at least one second stream with a reduced bandwidth, said transmission means (2.4) also being activated by the means (2.4) of receiving the request, **characterized by** each second stream transmitting the audiovisual data of second channels, each second channel being able to be received by a stream in full-definition mode by the entry of a second command following the first command.

11. Transmitter of audiovisual streams according to Claim 10; **characterized in that** it comprises a means (2.3) of storing a list of audiovisual channels, a second stream to be transmitted with a reduced bandwidth being one of the elements following or preceding the first stream within said list.

12. Receiver (1) comprising a means (5) of receiving audiovisual streams transmitted by a network (6), a means (10; 2) of displaying a received stream, a means (8) of entering a first command in order to display a first audiovisual data channel and a means (3, 4, 5) of transmitting a request for the transmission of a first stream in full-definition mode corresponding to this first channel in response to the entry of the first command;
it further comprises a means (3, 4, 5) of receiving at least one second stream with a reduced bandwidth, this second stream having a bandwidth that is smaller than the first and **characterized by** the second stream transmitting the audiovisual data of a second channel, this second channel being able to be received by a stream in full-definition mode by the entry of a second command following the first command.

13. Receiver of audiovisual streams according to Claim 12; **characterized in that** it comprises a means (4) of storing a list of audiovisual channels, the transmission means (3, 4, 5) transmits a request for the transmission of at least one second stream with a reduced bandwidth, a second stream to be transmitted with a reduced bandwidth being one of the elements following or preceding the first stream within said stored list.

14. Receiver of audiovisual streams according to Claim 13; **characterized in that** it comprises a means (8) of entering the list of audiovisual channels.

15. Receiver of audiovisual streams according to any one of Claims 12 to 14; **characterized in that** the display means (10; 2) displays the second reduced bandwidth stream in the form of an animation.

16. Receiver of audiovisual streams according to any one of Claims 12 to 15; **characterized in that** the reception means (3, 4, 5) receives a plurality of second reduced bandwidth streams, the receiver comprising a means of creating a mosaic image displaying the visual contents extracted from said second streams.

17. Receiver of audiovisual streams according to any one of Claims 12 to 15; **characterized in that** the reception means (3, 4, 5) receives a stream transmitting mosaic images, the second streams being extracted from the parts of the mosaic image corresponding to the second audiovisual data channels.

18. Receiver of audiovisual streams according to any one of Claims 12 to 17; **characterized in that** the display means (10; 2) displays the channel in full-definition mode and identifiers identifying the second streams.

## Patentansprüche

1. Verfahren zum Senden von audiovisuellen Strömen von einem Server an eine Vorrichtung, wobei das Verfahren einen Schritt zum Eingeben eines ersten Befehls, um einen ersten audiovisuellen Datenkanal an der Vorrichtung zu sehen, und einen Schritt zum Senden eines ersten Stroms, der diesem ersten Kanal entspricht, in einer Betriebsart mit voller Auflösung an die Vorrichtung (1) in Reaktion auf die Eingabe des ersten Befehls umfasst;
wobei es ferner einen zweiten Schritt zum Senden mindestens eines zweiten Stroms, ebenfalls in Reaktion auf die Eingabe des ersten Befehls, von dem Server an die Vorrichtung umfasst, wobei dieser zweite Strom eine kleinere Bandbreite als der erste aufweist, und **dadurch gekennzeichnet, dass** der zweite Strom die audiovisuellen Daten eines zweiten Kanals überträgt, wobei dieser zweite Kanal durch einen Strom in der Betriebsart mit voller Auflösung empfangen werden kann, indem nach dem ersten Befehl ein zweiter Befehl eingegeben wird.

2. Verfahren zum Senden von audiovisuellen Strömen gemäß Anspruch 1; **dadurch gekennzeichnet, dass** es einen Schritt zum Speichern einer Liste audiovisueller Kanäle umfasst, wobei ein zweiter Strom, der mit einer verringerten Bandbreite zu übertragen ist, eines der Elemente ist, die auf den ersten Strom in der Liste folgen oder ihm vorausgehen.

3. Verfahren zum Senden von audiovisuellen Strömen gemäß Anspruch 1 oder 2; **dadurch gekennzeichnet, dass** es einen Schritt zum Eingeben des zweiten Befehls, der einen ersten Schritt zum Anzeigen des zweiten Kanals, der von dem zweiten Strom mit einer verringerten Bandbreite empfangen wird, auslöst, und einen Schritt zum Senden eines dritten Stroms, der diesem zweiten Kanal entspricht, in der Betriebsart mit voller Auflösung an die Vorrichtung (1), umfasst, wobei der Empfang des dritten Stroms die Anzeige des zweiten Kanals in der Betriebsart mit voller Auflösung auslöst.

4. Verfahren zum Senden von audiovisuellen Strömen gemäß Anspruch 3; **dadurch gekennzeichnet, dass** der erste Anzeigeschritt einen Schritt zum Animieren des durch den Strom mit einer verringerten Bandbreite gesendeten Bilds umfasst.

5. Verfahren zum Senden von audiovisuellen Strömen gemäß Anspruch 4; **dadurch gekennzeichnet, dass** der Animationsschritt mit der Anzeige der durch den dritten Strom gesendeten Bilder in der Betriebsart mit voller Auflösung endet.

6. Verfahren zum Senden von audiovisuellen Strömen gemäß einem der Ansprüche 1 bis 5; **dadurch gekennzeichnet, dass** der zweite Sendeschritt im Senden mehrerer zweiter Ströme, auf die durch zweite Benutzerbefehle zugegriffen werden kann, und aus einem Schritt zum Anzeigen eines Mosaikbilds, das die aus den zweiten Strömen entnommenen visuellen Inhalte anzeigt, auf der Vorrichtung besteht.

7. Verfahren zum Senden von audiovisuellen Strömen gemäß einem der Ansprüche 1 bis 5; **dadurch gekennzeichnet, dass** der Strom mit einer verringerten Bandbreite aus einem Strom entnommen wird, der ein Mosaikbild überträgt.

8. Verfahren zum Senden von audiovisuellen Strömen gemäß einem der vorstehenden Ansprüche; **dadurch gekennzeichnet, dass** es einen Schritt zum Erzeugen einer Favoritenliste zweiter Ströme umfasst, wobei durch Navigieren in der Favoritenliste durch den zweiten Benutzerbefehl sofort auf einen der zweiten Ströme zugegriffen werden kann.

9. Verfahren zum Senden von audiovisuellen Strömen gemäß einem der vorstehenden Ansprüche; **dadurch gekennzeichnet, dass** es einen Schritt zum Anzeigen des ersten Kanals in einer Betriebsart mit voller Auflösung und von Kennungen, die die zweiten Ströme identifizieren, an der Vorrichtung (1) umfasst.

10. Sender (20), der ein Mittel (2.4) zum Senden audiovisueller Ströme über ein Netz (6) und ein Mittel (2.4) zum Empfangen einer von einer Vorrichtung (1) ausgehenden Anforderung, um nach der Eingabe eines ersten Befehls, der die Aktivierung des Sendemittels zum Senden eines ersten Stroms in einer Betriebsart mit voller Auflösung an die Vorrichtung (1) auslöst, an der Vorrichtung einen ersten audiovisuellen Datenkanal zu sehen, umfasst,
wobei er ferner ein Mittel (2.4) zum Senden mindestens eines zweiten Stroms mit einer verringerten Bandbreite an dieselbe Vorrichtung (1) umfasst, wobei das Sendemittel (2.4) ebenfalls durch das Mittel (2.4) zum Empfangen der Anforderung aktiviert wird, **dadurch gekennzeichnet, dass** jeder zweite Strom die audiovisuellen Daten der zweiten Kanäle überträgt, wobei jeder zweite Kanal durch die Eingabe eines zweiten Befehls nach dem ersten Befehl durch einen Strom in einer Betriebsart mit voller Auflösung empfangen werden kann.

11. Sender audiovisueller Ströme gemäß Anspruch 10; **dadurch gekennzeichnet, dass** er ein Mittel (2.3) zum Speichern einer Liste audiovisueller Kanäle umfasst, wobei ein zweiter Strom, der mit einer verringerten Bandbreite zu übertragen ist, eines der Elemente ist, die auf den ersten Strom in der Liste folgen oder ihm vorausgehen.

12. Empfänger (1), der ein Mittel (5) zum Empfangen audiovisueller Ströme, die durch ein Netz (6) übertragen werden, ein Mittel (10; 2) zum Anzeigen eines empfangenen Stroms, ein Mittel (8) zum Eingeben eines ersten Befehls zum Anzeigen eines ersten audiovisuellen Datenkanals und ein Mittel (3, 4, 5) zum Senden einer Anforderung für die Sendung eines ersten Stroms, der diesem ersten Kanal entspricht, in einer Betriebsart mit voller Auflösung in Reaktion auf die Eingabe des ersten Befehls umfasst;
wobei er ferner ein Mittel (3, 4, 5) zum Empfangen mindestens eines zweiten Stroms mit einer verringerten Bandbreite umfasst, wobei dieser zweite Strom eine Bandbreite aufweist, die kleiner als die erste ist, und
**dadurch gekennzeichnet, dass** der zweite Strom die audiovisuellen Daten eines zweiten Kanals überträgt,
wobei dieser zweite Kanal durch die Eingabe eines zweiten Befehls nach dem ersten Befehl durch einen Strom in einer Betriebsart mit voller Auflösung empfangen werden kann.

13. Empfänger audiovisueller Ströme gemäß Anspruch 12; **dadurch gekennzeichnet, dass** er ein Mittel (4) zum Speichern einer Liste audiovisueller Kanäle umfasst,
wobei das Sendemittel (3, 4, 5) eine Anforderung für die Sendung mindestens eines zweiten Stroms mit einer verringerten Bandbreite sendet, wobei ein zweiter Strom, der mit einer verringerten Bandbreite zu übertragen ist, eines der Elemente ist, die auf den ersten Strom in der gespeicherten Liste folgen oder ihm vorausgehen.

14. Empfänger audiovisueller Ströme gemäß Anspruch 13; **dadurch gekennzeichnet, dass** er ein Mittel (8) zum Eingeben der Liste audiovisueller Kanäle umfasst.

15. Empfänger audiovisueller Ströme gemäß einem der Ansprüche 12 bis 14; **dadurch gekennzeichnet, dass** das Anzeigemittel (10; 2) den zweiten Strom mit verringerter Bandbreite in Form einer Animation anzeigt.

16. Empfänger audiovisueller Ströme gemäß einem der Ansprüche 12 bis 15; **dadurch gekennzeichnet, dass** das Empfangsmittel (3, 4, 5) mehrere zweite Ströme mit verringerter Bandbreite empfängt, wobei der Empfänger ein Mittel zum Erzeugen eines Mosaikbilds umfasst, das die aus den zweiten Strömen entnommenen visuellen Inhalte anzeigt.

17. Empfänger audiovisueller Ströme gemäß einem der Ansprüche 12 bis 15; **dadurch gekennzeichnet, dass** das Empfangsmittel (3, 4, 5) einen Strom empfängt, der Mosaikbilder überträgt, wobei die zweiten Ströme aus den Teilen des Mosaikbilds, die den zweiten audiovisuellen Datenkanälen entsprechen, entnommen werden.

18. Empfänger audiovisueller Ströme gemäß einem der Ansprüche 12 bis 17; **dadurch gekennzeichnet, dass** das Anzeigemittel (10; 2) den Kanal in einer Betriebsart mit voller Auflösung und Kennungen, die die zweiten Ströme identifizieren, anzeigt.

## Revendications

1. Procédé de transmission de flux audiovisuels à partir d'un serveur vers un appareil, comportant une étape d'introduction d'une première commande en vue de visualiser un premier canal de données audiovisuelles au niveau de l'appareil et une étape de transmission vers l'appareil (1) d'un premier flux en pleine résolution correspondant à ce premier canal en réponse à l'introduction de la première commande;
comportant également une seconde étape de transmission du serveur vers l'appareil, d'au moins un second flux en réponse également à l'introduction de la première commande, ce second flux ayant une bande passante plus réduite que le premier et **caractérisé en ce que** le second flux transmet les données audiovisuelles d'un second canal, ce second canal pouvant être reçu par un flux en pleine résolution en introduisant une seconde commande consécutivement à la première commande.

2. Procédé de transmission de flux audiovisuels selon la revendication 1 ; **caractérisé en ce qu'**il comporte une étape de mémorisation d'une liste de canaux audiovisuels, un second flux à émettre avec une bande passante réduite étant un des éléments suivants ou précédents le premier flux au sein de ladite liste.

3. Procédé de transmission de flux audiovisuels selon la revendication 1 ou 2; **caractérisé en ce qu'**il comporte une étape d'introduction de la seconde commande déclenchant une première étape d'affichage du second canal reçu par le second flux ayant une bande passante réduite et une étape de transmission vers l'appareil (1) d'un troisième flux en pleine résolution correspondant à ce second canal, la réception du troisième flux déclenchant l'affichage du second canal en pleine résolution.

4. Procédé de transmission de flux audiovisuels selon la revendication 3 ; **caractérisé en ce que** la première étape d'affichage comporte une étape d'animation de l'image transmise par le flux ayant une bande passante réduite.

5. Procédé de transmission de flux audiovisuels selon la revendication 4 ; **caractérisé en ce que** l'étape d'animation se termine par l'affichage des images en pleine résolution transmise par le troisième flux.

6. Procédé de transmission de flux audiovisuels selon l'une quelconque des revendications 1 à 5 ; **caractérisé en ce que** la seconde étape de transmission consiste à transmettre une pluralité de second flux accessibles par des secondes commandes de l'utilisateur, et une étape d'affichage au niveau de l'appareil d'une image mosaïque affichant les contenus visuels extraits desdits second flux..

7. Procédé de transmission de flux audiovisuels selon l'une quelconque des revendications 1 à 5 ; **caractérisé en ce que** le flux avec une bande passante réduite est extrait d'un flux transmettant une image mosaïque.

8. Procédé de transmission de flux audiovisuels selon l'une quelconque des revendications précédentes ; **caractérisé en ce qu'**il comporte une étape d'établissement d'une liste favorite de second flux, l'un des second flux étant immédiatement accessible par la seconde commande de l'utilisateur en naviguant dans ladite liste favorite.

9. Procédé de transmission de flux audiovisuels selon l'une quelconque des revendications précédentes ; **caractérisé en ce qu'**il comporte au niveau de l'appareil (1) une étape d'affichage du premier canal en pleine définition et des identificateurs identifiant les second flux.

10. Emetteur (20) comportant un moyen d'émission (2.4) de flux audiovisuels sur un réseau (6), et un moyen de réception (2.4) d'une requête provenant d'un appareil (1) en vue de visualiser un premier canal de données audiovisuelles au niveau dudit appareil suite à l'introduction d'une première commande au niveau de l'appareil déclenchant l'activation du moyen d'émission pour transmettre vers l'appareil (1) un premier flux en pleine résolution ;
comportant également un moyen d'émission (2.4) vers le même appareil (1) d'au moins un second flux avec une bande passante réduite, ledit moyen d'émission (2.4) étant aussi activé par le moyen de réception (2.4) de la requête, et **caractérisé en ce que** chaque second flux transmettant les données audiovisuelles de second canaux, chaque second canal pouvant être reçu par un flux en pleine résolution par l'introduction d'une seconde commande consécutivement à la première commande.

11. Emetteur de flux audiovisuels selon la revendication 10 ; **caractérisé en ce qu'**il comporte un moyen de mémorisation (2.3) d'une liste de canaux audiovisuels, un second flux à émettre avec une bande passante réduite étant un des éléments suivants ou précédents le premier flux au sein de ladite liste.

12. Récepteur (1) comportant un moyen de réception (5) de flux audiovisuels transmis par un réseau (6), un moyen d'affichage (10 ; 2) d'un flux reçu, un moyen d'introduction (8) d'une première commande en vue d'afficher un premier canal de données audiovisuelles et un moyen d'émission (3, 4, 5) d'une requête pour la transmission d'un premier flux en pleine résolution correspondant à ce premier canal en réponse à l'introduction de la première commande ;
comportant également un moyen de réception (3, 4, 5) d'au moins un second flux avec une bande passante réduite, ce second flux ayant une bande passante plus réduite que le premier et **caractérisé en ce que** le second flux transmet les données audiovisuelles d'un second canal, ce second canal pouvant être reçu par un flux en pleine résolution par l'introduction d'une seconde commande consécutivement à la première commande.

13. Récepteur de flux audiovisuels selon la revendication 12 ; **caractérisé en ce qu'**il comporte un moyen de mémorisation (4) d'une liste de canaux audiovisuels, le moyen d'émission (3, 4, 5) transmet une requête pour la transmission d'au moins un second flux avec une bande passante réduite, un second flux à émettre avec une bande passante réduite étant un des éléments suivants ou précédents le premier flux au sein de ladite liste mémorisée.

14. Récepteur de flux audiovisuels selon la revendication 13 ; **caractérisé en ce qu'**il comporte un moyen d'introduction (8) de la liste de canaux audiovisuels.

15. Récepteur de flux audiovisuels selon l'une quelconque des revendications 12 à 14 ; **caractérisé en ce que** le moyen d'affichage (10 ; 2) affiche sous la forme d'une animation le second flux de bande passante réduite.

16. Récepteur de flux audiovisuels selon l'une quelconque des revendications 12 à 15 ; **caractérisé en ce que** le moyen de réception (3, 4, 5) reçoit une pluralité de second flux de bande passante réduite, le récepteur comportant un moyen de création d'une image mosaïque affichant les contenus visuels extraits desdits second flux.

17. Récepteur de flux audiovisuels selon l'une quelconque des revendications 12 à 15 ; **caractérisé en ce que** le moyen de réception (3, 4, 5) reçoit un flux transmettant des images mosaïques, les second flux étant extraits des parties de l'image mosaïque correspondant aux seconds canaux de données audiovisuelles.

18. Récepteur de flux audiovisuels selon l'une quelconque des revendications 12 à 17 ; **caractérisé en ce que** le moyen d'affichage (10 ; 2) affiche le canal en pleine définition et des identificateurs identifiant les second flux.
